# EUROPEAN PATENT APPLICATION

(11) **EP 3 521 865 A1**
(43) Date of publication of application: **07.08.2019**
(21) Application number: 19152253.1
(22) Date of filing: 17.01.2019
(51) Int. Cl.: G01W 1/02, F03D 7/00

(54) **WIND TURBINE METEOROLOGICAL DATA COLLECTION AND PROCESSING SYSTEM**

(30) Priority: 05.02.2018 US 201815889024
(71) Applicant: GE Energy Power Conversion Technology Ltd., Warwickshire CV21 1BU (GB)
(72) Inventor: LOUCO,, Lathom Alexander, Salem, VA Virginia 24153 (US); MICHENER,, Nathaniel Robert, Salem, VA Virginia 24153 (US)
(74) Representative: Serjeants LLP

(57) **Abstract**

Provided is a wind turbine meteorological data collection and processing system that includes at least one wind turbine having a plurality of sensors configured to sense data including weather-related data, a controller configured to control the plurality of sensors, a processor configured to process the data, and a transmitter configured to transmit the data. The system also includes a computing platform in communication with the at least one wind turbine and to receive the data from the at least one wind turbine, and sort the data based on geographical location of the at least one wind turbine.

## Description

### TECHNICAL FIELD

The present invention relates generally to a wind turbine meteorological data collection and processing system. In particular, the present invention relates to a method and application for use of meteorological data collected by a wind turbine meteorological data collection and processing system.

### BACKGROUND OF THE INVENTION

Wind Turbine systems can be used as an alternative way to gather weather data for use in multiple different environments.

It is desirable to have a wind turbine meteorological data collection and processing system to efficiently collect and relay data information in real-time, and on-demand, as desired.

### SUMMARY OF THE INVENTION

The present invention provides a wind turbine meteorological data collection and processing system to collect, organize and distribute data in real time and on demand, as desired.

In embodiments of the present invention a wind turbine meteorological data collection and processing system is provided. The system includes at least one wind turbine having a plurality of sensors configured to sense data including weather-related data, a controller configured to control the plurality of sensors, a processor configured to process the data, and a transmitter configured to transmit the data. The system also includes a computing platform in communication with the at least one wind turbine and to receive the data from the at least one wind turbine, and sort the data based on geographical location of the wind turbine.

The system may further comprise a web application configured to be initiated at a user device by a user, for accessing the data from the computing platform in real-time or automatically at predetermined time intervals.

The data may include data related to at least one of temperature, humidity, barometric pressure, air quality data, wind speed and direction, cloud content, solar activity, water level, wave height, water temperature and tidal current.

The data collected by the sensors may be transmitted via wireless communication to the microcontroller or directly to the processor in communication with the microcontroller, for processing.

The computing platform may comprise specific instructions for handling incoming data including time-stamping and date-stamping the data.

The geographical location may be determined by global positioning technology.

The computing platform may be further configured to assign a tag to the data as predefined by the system and/or based on end-user-defined specific application.

The computing platform may be further configured to transmit the data to an airline in communication with the software module, to provide weather predictions directly to the airplane operators and air traffic controllers. The data obtained at the microcontroller or processor may be transmitted directly to the airline for weather prediction determination.

According to other embodiments of the present invention, a wind turbine meteorological data collection and processing system is provided. The system includes at least one wind turbine comprising a plurality of sensors configured to sense data including weather-related data, a controller configured to control the plurality of sensors, a processor configured to process the data, and a transmitter configured to transmit the data; and a software module configured to determine weather predictions based on the data, and accessible by a computer.

The data may be accessible in real-time and on-demand by a user or automatically at predetermined time intervals.

The software module may be accessible by a solar farm, to thereby determine weather predictions and output power to be supplied to solar panels. A continuous communication link may be created between the sensors, microcontroller, the processor and the solar farm to supply the data in real-time.

The software module may be accessible by a control system of a power plant, to determine weather predictions and output power information, wherein the weather predictions and output power information are utilized to initiate a black start machine to black start a generator for the power plant.

The software module may be accessible by a control system of an oil rig, for performing weather predictions for controlling drilling operations. When the black start machine is solar panels, the system may determine whether there is enough sun, based on the data received, to black start a prime mover and the generator for the power plant. When the black start machine is a wind turbine, the system may determine whether there is enough wind, based on the data received, to black start a prime mover and the generator for the power plant.

Systems according to alternative embodiments of the present invention are also provided.

The foregoing has broadly outlined some of the aspects and features of various embodiments, which should be construed to be merely illustrative of various potential applications of the disclosure. Other beneficial results can be obtained by applying the disclosed information in a different manner or by combining various aspects of the disclosed embodiments. Accordingly, other aspects and a more comprehensive understanding may be obtained by referring to the detailed description of the exemplary embodiments taken in conjunction with the accompanying drawings, in addition to the scope defined by the claims.

### BRIEF DESCRIPTION OF THE DRAWINGS

FIG. 1 is a schematic illustrating a wind turbine to be implemented within the wind turbine data system according to embodiments of the present invention.
FIG. 2 is a block diagram illustrating a wind turbine meteorological data collection and processing system for on-demand deliver data to an end-user that can be implemented within one or more embodiments of the present invention.
FIG. 3 is a block diagram illustrating a wind turbine meteorological data collection and processing system to be used by agricultural persons, that can be implemented within a wind farm environment that can be implemented within one or more alternative embodiments of the present invention.
FIG. 4 is a block diagram illustrating a wind turbine meteorological data collection and processing system that can be implemented within a solar farm environment that can be implemented within one or more alternative embodiments of the present invention.
FIG. 5 is a block diagram illustrating a wind turbine meteorological data collection and processing system for purpose of black-starting a power plant, that can be implemented within a power plant environment that can be implemented within one or more alternative embodiments of the present invention.
FIG. 6 is a block diagram illustrating a wind turbine meteorological data collection and processing system that can be implemented within an airline environment that can be implemented within one or more alternative embodiments of the present invention.
FIG. 7 is a block diagram illustrating a wind turbine meteorological data collection and processing system that can be implemented within an off-shore or on-shore oil drilling environment that can be implemented within one or more alternative embodiments of the present invention.

The drawings are only for purposes of illustrating preferred embodiments and are not to be construed as limiting the disclosure. Given the following enabling description of the drawings, the novel aspects of the present disclosure should become evident to a person of ordinary skill in the art. This detailed description uses numerical and letter designations to refer to features in the drawings. Like or similar designations in the drawings and description have been used to refer to like or similar parts of embodiments of the invention.

### DETAILED DESCRIPTION

As required, detailed embodiments are disclosed herein. It must be understood that the disclosed embodiments are merely exemplary of various and alternative forms. As used herein, the word "exemplary" is used expansively to refer to embodiments that serve as illustrations, specimens, models, or patterns. The figures are not necessarily to scale and some features may be exaggerated or minimized to show details of particular components.

In other instances, well-known components, apparatuses, materials, or methods that are known to those having ordinary skill in the art have not been described in detail in order to avoid obscuring the present disclosure. Therefore, specific structural and functional details disclosed herein are not to be interpreted as limiting, but merely as a basis for the claims and as a representative basis for teaching one skilled in the art.

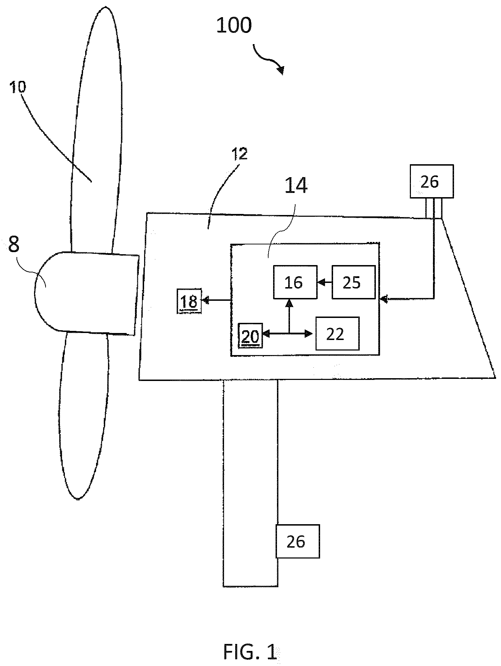

The embodiments of the present invention include one or more wind turbines for purposes of collecting, organizing and distributing wind-related data, weather data and other data. An example of a wind turbine as shown in FIG. 1. The wind turbine 100 includes a rotor 8 having at least one rotatable blade 10 mounted thereon, a nacelle 12 which houses a generator to be driven by the rotor 8, an onboard control system 14 which includes a controller 16, a processor 20 for processing data and a transmitter 22 in communication the processor 20 for transmitting data to and from the wind turbine 100.

The wind turbine 100 further includes one or more sensors 26 for sensing weather data to be collected from the wind turbine 100. The sensors 26 can be disposed inside or outside of the nacelle 12. The controller 16 controls the generator 18, the processor 20, the transmitter 22, and the sensors 26. These components can also be controlled by a remote control system physically located within in a remote location or in a cloud environment on a remote server. For example, the system can be remotely controlled by a Network Agent which is a controller/processor on the same network, or at the wind turbine, or off-shore in a data center. Alternatively, the system can be controlled via a local computer on the same local area network (LAN).

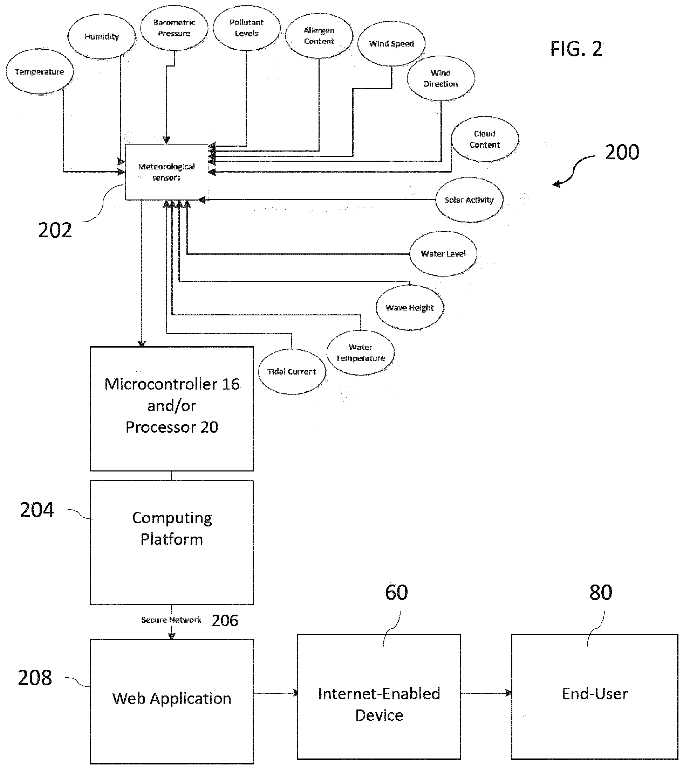

A wind turbine meteorological data collection and processing system as shown and described below with reference to FIGS. 2-7. The wind turbine meteorological data collection and processing systems of the present invention are capable of collecting, organizing and distributing weather and wind-related data.

As shown in FIG. 2, a wind turbine meteorological data collection and processing system 200 is provided. The system 200 includes one or more wind turbines 100 as shown in FIG. 1. For purposes of illustration of the present invention, implementation of the system 200 using a single wind turbine 100 is discussed.

The system 200 includes the sensors 26 as depicted in FIG. 1, such as meteorological sensors 202, the microcontroller 16 and/or processor 20, a computing platform 204 in communication with a web application 208 or other hosting service over a secured communication network 206. The system 200 is accessible via an internet-enabled computing device 60 such as a mobile device or other computing device by an end-user 80.

The meteorological sensors 202 (e.g., sensor 26 in FIG. 1) are disposed within a tower of the wind turbine 100 as depicted in FIG. 1, and at a down tower location disposed on a support platform. The sensors 202 are configured to sense data such as temperature, humidity, barometric pressure, air quality e.g., pollutant levels and allergen contents, wind speed and direction, cloud content, solar activity, water level, wave height, water temperature and tidal current.

The sensors 202 can be any type of sensor suitable for the purposes set forth herein.

The data collected by the sensors 202 are transmitted via wired or wireless communication, from the sensors 202 to the microcontroller 16 or directly to the processor 20 in communication with the microcontroller 16, for processing.

Referring back to FIG. 1, a GPS unit 25 is in communication with the microcontroller 16 and located within the nacelle 12 or alternatively mounted to the nacelle 12 and connected to the microcontroller 16 via a wired or wireless communication system. The GPS unit 25 is used to determine the location of the wind turbine 100. The present invention is not limited to the GPS unit 25 being housed in a particular location. Further, the present invention is not limited to use of a GPS unit for determining location of the wind turbine. Alternatively, the location can be set in the processor 20 during the wind turbine commissioning process, for example.

The data collected is then transmitted by the transmitter 22 to the computing platform 204. The computing platform 204 can be located inside or outside of the wind turbine 100. The computing platform 204 includes specific instructions/code written to handle the incoming data with a storage system (i.e., memory). A special application code is run on the computing platform 204.

The computing platform 204 is configured to time-stamp and sort the data received by location (e.g., physical/geographical location of the wind turbine 100 (as depicted in FIG. 1)) as determined by GPS technology via the GPS unit 25. That is, the computing platform 204 is also capable of location-stamping the data based on the information received from the GPS unit 25.

The computing platform 204 further assigns a tag to the specific data, as predefined by the system 200, and/or based on possible appropriate use (e.g., end-user-defined specific application). For example, a specific tag may link precipitation data to agricultural persons, a weather station or to an individual user for their specific purposes.

An end-user 80 is then able to access the specific data in real-time and on-demand, by initiating the web application 208 via their internet-enabled computing device 60, as desired. The web application 208 may require the end-user to set up an account by establishing log in information to gain access thereto. In the web application 208, the special instructions are used in order to parse through incoming data, sort and store it. The end-user 80 can freely access the data or schedule for the data to automatically be retrieved at certain time intervals, for example, every hour, once per day, etc.

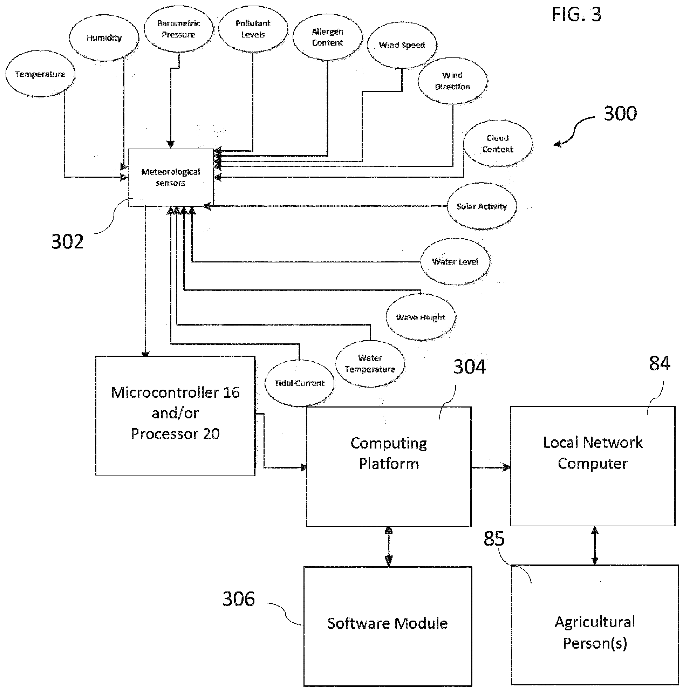

FIGS. 3-7 illustrate wind turbine meteorological data collection and processing systems according to alternative embodiments. As shown in FIG. 3, the wind turbine meteorological data collection and processing system 300 includes similar features as the wind turbine meteorological data collection and processing system 200 as depicted in FIG. 2.

The wind turbine(s) 100 can be located on a local wind farm or agricultural farm and communicates data to a local network computer 84 to be accessed by agricultural person(s) 85. The system 300 includes meteorological sensors 302 which are similar to the sensors 202 of FIG. 2, the sensors 302 sense data including temperature, humidity, barometric pressure, pollutant levels, allergen content, wind speed and direction, cloud content, solar activity, water level, wave height, water temperature, tidal current.

The sensors 302 are configured to transmit the sensed data to the local network computer 84 for further processing. The system 300 further includes a computing platform 304 similar to the computing platform 204 in FIG. 2. The computing platform 304 includes tracking software module 306 which includes prediction capabilities, for determining weather patterns and predictions based on the sensed data received. The computing platform 304 transmits the information to the local network computer 84.

The agricultural person(s) 85 accesses these weather predictions from the local network computer 84, in real-time and on-demand as desired. Alternatively, the computing platform 304 can be located within the local network computer 84.

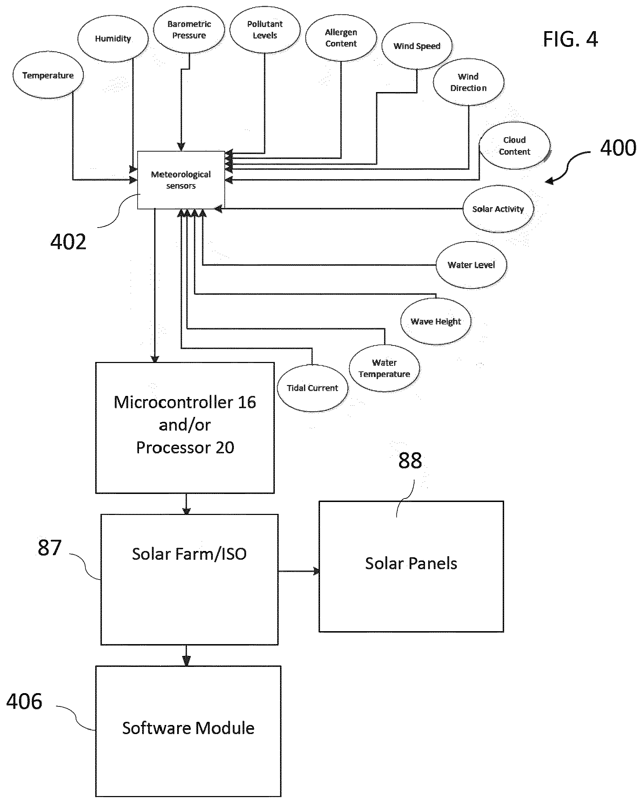

In FIG. 4, another wind turbine meteorological data collection and processing system 400 for a solar farm environment is illustrated. As shown in FIG. 4, the system 400 includes meteorological sensors 402 for sensing data including temperature, humidity, barometric pressure, pollutant levels, allergen content, wind speed and direction, cloud content, solar activity, water level, wave height, water temperature, and tidal current, for example.

The sensed data e.g., cloud content, solar activity and other sun-specific data is sent to the microcontroller 16 and/or the processor 20 of the wind turbine 100 for processing. A solar farm 87 having an independent system operator (ISO) is equipped with a software module 406 including prediction and power output forecasting capabilities.

The sensed data is transmitted from the microcontroller 16 or processor 20 of the wind turbine 100 to the solar farm 87. A continuous communication link is created between the sensors 402, microcontroller 16 and processor 20, and the solar farm 87 to supply real-time data, therefore accurate predictions and output power availability can be determined. Thus, the system 400 can operate the solar panels 88 based on the predictions and output power availability.

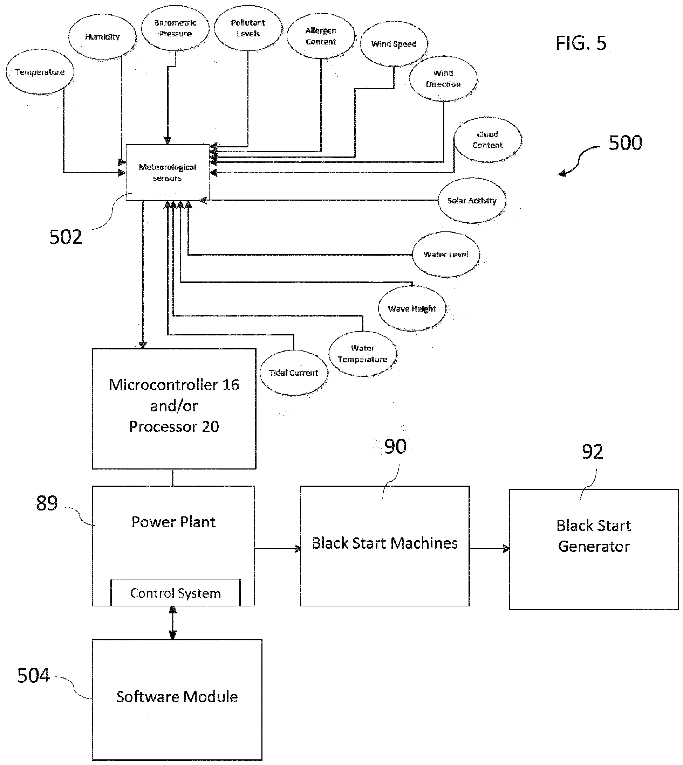

In FIG. 5, a wind turbine meteorological data collection and processing system 500 for use with a power plant 89 is illustrated. The system 500 includes meteorological sensors 502 to sense data similar to sensors 202, 302 and 402 depicted in FIGS. 2-4, respectively. The data is transmitted to the microcontroller 16 and/or processor 20 for further processing.

The power plant 89 includes a control system having access to a software module 504 with prediction and power output forecasting capabilities, to be accessed by a power plant operator. When necessary, based on the predictions and power output availability, a black start machine 90 can utilize output power from the wind turbine to black start a prime mover and a generator 92 in lieu of employing backup generators onsite at the power plant 89. The black start machine 90 is a renewable energy machine consisting of solar panels or wind turbines for example.

The black start machine 90 determines based on the weather data received from the wind turbine(s) 100 whether there is enough power to successfully "black start" the power plant via the prime mover and the generator 92. For example, if solar panels are being used as a black start machine 90, the weather data collected can be used by the power plant 89 to determine if there is enough sun for the solar panels to produce enough power to start the generator 92. If wind turbines are the black start machine 90 then the weather data is used to determine if there is enough wind to start the black start generator 92.

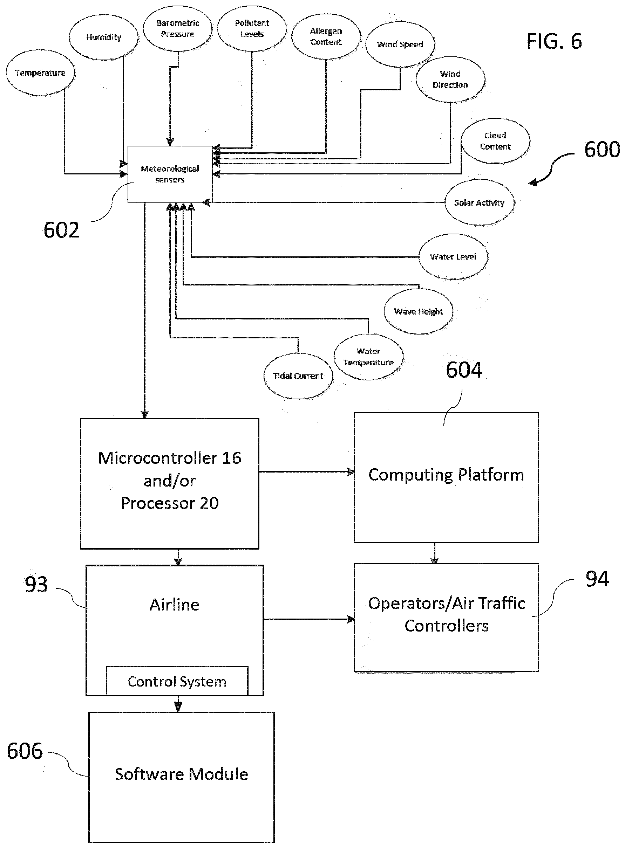

In FIG. 6, a wind turbine meteorological data collection and processing system 600 for use in an airline environment. As shown in FIG. 6, the system 600 includes meteorological sensors 602 sensing data such as barometric pressure, wind speed, cloud content for storm prediction to assist airplanes. The data is collected and transmitted to the microcontroller 16 and/or the processor 20 for further processing. The data is then transmitted to a computing platform 604 to be time-stamped and sorted by geographical location.

The raw data obtained at the microcontroller 16 and/or processor 20 directly from the sensors 602 can also be transmitted in real-time directly to the airline 93 for direct processing, as desired. The airline 93 includes computing systems employing at least one software module 606 having prediction and storm forecasting capabilities. The airline 93 is therefore able to provide predictions and storm activity information directly to the airplane operators and air traffic controllers 94 to facilitate takeoffs and landings of airplanes and predict flight disturbances. Further, weather models can be updated base on the weather data received.

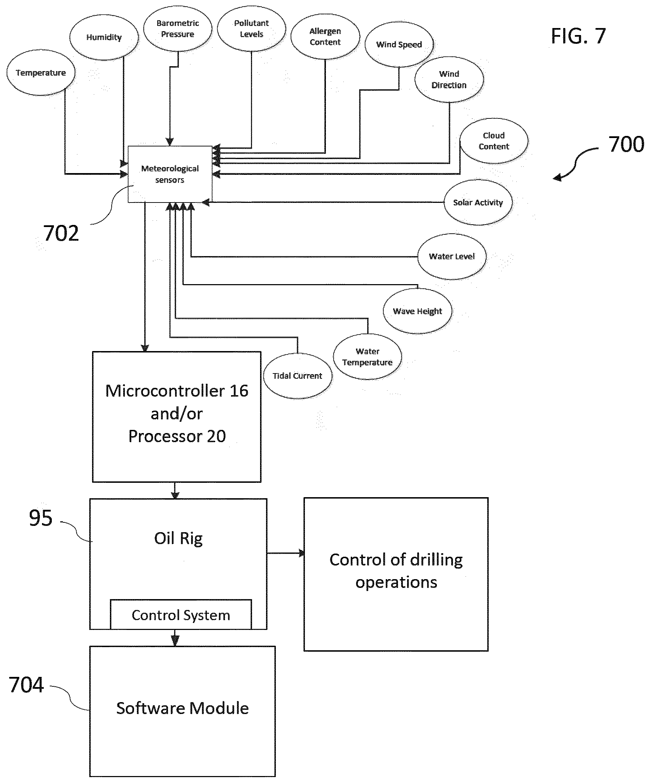

According to another embodiment, a wind turbine meteorological data collection and processing system 700 for use in an oil rig 95 environment is illustrated in FIG. 7. The system 700 includes meteorological sensors 702 for obtaining data including for example, water level, water temperature, wave height and tidal current data, and air quality and cloud content data. This data is transmitted to the microcontroller 16 and/or processor 20 of the wind turbine 100 for further processing.

The oil rig 95 is in continuous communication with the microcontroller 16 and/or processor 20 and includes an on-board control system employing a software module 704 of the system 700 having prediction and weather forecasting capabilities. The oil rig 95 is therefore able to control drilling operations based on the weather predictions.

According to embodiments of the present invention, systems 400, 500 and 700 shown in FIGS. 4, 5 and 7 can also include a computing platform (e.g., computing platform 204 as depicted in FIG. 2), for performing the instructions of the software modules to parse through, sort and tag the data desired.

According to yet other embodiments of the present invention, a process for purchasing data from the wind turbine meteorological data collection and processing system may be implemented wherein an end-user registers to gain access to the user-specific application data collected by the systems 200, 300, 400, 500, 600 and 700 from multiple wind turbines, as desired.

The wind turbine meteorological data collection and processing system has several advantages, for example, increased predictive capabilities, more accurate assessment of local weather patterns and emergency weather notifications, and weather mapping assistance. The system provides for a larger amount of weather data collection across geographic regions while also making weather data available on systems that are traditionally closed to other networks (e.g., secured power networks). In addition, the system provides more efficient forecasting for farmers, and a reduction in power plant costs due to utilizing renewable sources for black starts instead of backup generators, and enhanced assistance with flight navigation for aircrafts.

This written description uses examples to disclose the invention including the best mode, and also to enable any person skilled in the art to practice the invention, including making and using any devices or apparatuses and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A wind turbine meteorological data collection and processing system (200, 300, 400, 500, 600, 700), comprising:
at least one wind turbine (100) comprising:
a plurality of sensors (26) configured to sense data including weather-related data,
a controller (16) configured to control the plurality of sensors,
a processor (20) configured to process the data, and
a transmitter (22) configured to transmit the data; and
a computing platform (204, 304, 604) in communication with the at least one wind turbine (100) and configured to: (i) receive the data from the at least one wind turbine (100), and (ii) sort the data based on geographical location of the at least one wind turbine (100).

2. A system (200, 300, 400, 500, 600, 700) according to claim 1, further comprising:
a web application (208) configured to be initiated at a user device (60) by a user (80), for accessing the data from the computing platform (204) in real-time or automatically at predetermined time intervals.

3. A system (200, 300, 400, 500, 600, 700) according to claim 1 or claim 2, wherein the data includes data related to at least one of temperature, humidity, barometric pressure, air quality data, wind speed and direction, cloud content, solar activity, water level, wave height, water temperature and tidal current.

4. A system (200, 300, 400, 500, 600, 700) according to any preceding claim, wherein the data collected by the sensors (26) is transmitted via wireless communication to the microcontroller (16) or directly to the processor (20) in communication with the microcontroller (16), for processing.

5. A system (200, 300, 400, 500, 600, 700) according to any preceding claim, wherein the computing platform (204, 304, 604) comprises specific instructions for handling incoming data including time-stamping and date-stamping the data.

6. A system (200, 300, 400, 500, 600, 700) according to any preceding claim, wherein the geographical location is determined by global positioning technology.

7. A system (200, 300, 400, 500, 600, 700) according to any preceding claim, wherein the computing platform (204, 304, 604) is further configured to assign a tag to the data as predefined by the system (200, 300, 400, 500, 600, 700) and/or based on end-user-defined specific application.

8. A system (200, 300, 400, 500, 600, 700) according to any preceding claim, wherein the computing platform (204, 304, 604) is further configured to transmit the data to an airline (93) in communication with the software module (606), to provide weather predictions directly to the airplane operators and air traffic controllers (94).

9. A system (200, 300, 400, 500, 600, 700) according to claim 8, wherein the data obtained at the microcontroller (16) or processor (20) is transmitted directly to the airline (93) for weather prediction determination.
